# EUROPEAN PATENT APPLICATION

(11) **EP 1 067 727 A2**
(43) Date of publication of application: **10.01.2001**
(21) Application number: 00305669.4
(22) Date of filing: 05.07.2000
(51) Int. Cl.: H04J 14/02

(54) **Optical branching unit and optical transmission line**

(30) Priority: 05.07.1999 JP 19024099
(71) Applicant: NEC CORPORATION, Tokyo (JP)
(72) Inventor: Michishita, Yukio, c/o NEC Corporation, Tokyo (JP)
(74) Representative: Moir, Michael Christopher

(57) **Abstract**

An optical branching unit for installation on an optical transmission line comprises an optical gain equalizer. The optical gain equalizer equalizes the levels of wavelength-multiplexed signal lights amplified by an optical amplifier. Because the levels of the signal lights propagated through optical branch lines become equalized at a branching point, the design of the optical transmission system with the optical branch lines is simplified. The optical branching unit may comprise a plurality of optical gain equalizers.

## Description

### BACKGROUND OF THE INVENTION

### 1. Field of the Invention

The present invention relates to an optical branching unit installed on an optical transmission line and to an optical transmission line.

### 2. Description of the Related Prior Art

Optical wavelength division multiplexing transmission (WDM transmission) is in practical use today as a large-capacity communication technology. In WDM transmission mode, a plurality of wavelength-multiplexed signal lights, each with its own wavelength different from others, propagate through an optical transmission line composed of optical fibers. For a long-distance optical transmission, optical repeaters, each with an optical fiber amplifier, are installed at regular intervals on the optical transmission line. In general, the gain of an optical fiber amplifier has a wavelength dependency. As wavelength-multiplexed signal lights, which propagate a long distance, are amplified by many optical fiber amplifiers, the intensities of signal lights differ greatly, degrading the reception S/N ratio. To solve this problem, each signal light may be assigned a unique intensity when transmitted from the transmitter. However, when the intensity of a particular signal light is too high, a nonlinear degradation results, decreasing the transmission characteristics. Thus, an optical repeater on an optical transmission line usually has an optical gain equalizer which compensates for the wavelength dependency of the gain of an optical fiber amplifier. Some of several optical repeaters has an optical gain equalizer in other systems. However, the problem is that, in some cases, an optical transmission line has many optical branch lines each with its own requirements. For example, in an optical transmission system having optical branch lines, optical repeaters, each with an optical fiber amplifier, are not always installed at regular intervals. In this case, if optical repeaters have an optical fiber amplifier and an optical gain equalizer with some specific characteristics, it is difficult to optimally design an optical transmission system with many optical branch lines. On the other hand, changing the gains of the optical fiber amplifiers and adjusting the characteristics of optical gain equalizers according to the conditions of each optical branch line in the whole optical transmission system are very costly.

### SUMMARY OF THE INVENTION

In view of the foregoing, it is an object of the preferred embodiments of the present invention to provide, for use on an optical transmission line, with branch lines, an optical branching unit with a configuration that allows the signal light gains to be equalized and an optimal transmission system to be easily designed.

The optical branching unit according to the present invention comprises a gain equalizer adjusting levels of a plurality of signal lights. The gain equalizer equalizes the levels of the plurality of signal lights. This gain equalizer compensates for the wavelength dependency of the gains of one or more optical fiber amplifiers installed on an optical transmission line. One or more gain equalizers maybe installed before, after, or before and after, the branch point of the optical branching unit. A plurality of gain equalizers, if used, may adjust the levels of signal lights each in its own wavelength band. On the other hand, the gain equalizers may adjust the levels of signal lights whose wavelength bands overlap partially or completely. The optical transmission line according to the present invention comprises one or more optical branching units and at least one of the optical branching units comprises a gain equalizer adjusting the signal light levels.

### BRIEF DESCRIPTION OF THE DRAWINGS

Preferred features of the present invention will now be described, by way of example only, with reference to the accompanying drawings, in which:-
FIG. 1 is a block diagram showing an example of the configuration of an optical branching unit according to the present invention and the characteristics.
FIG. 2 is a block diagram showing another example of the configuration of the optical branching unit according to the present invention.
FIG. 3 is a block diagram showing still another example of the configuration of the optical branching unit according to the present invention.
FIG. 4 is a block diagram showing still another example of the configuration of the optical branching unit according to the present invention.
FIG. 5 is a block diagram showing still another example of the configuration of the optical branching unit according to the present invention.

### DETAILED DESCRIPTION OF THE PREFERRED EMBODIMENTS

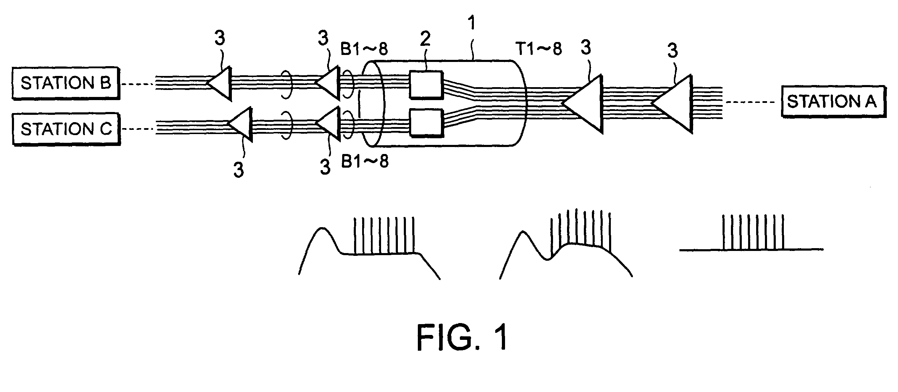

Referring to FIG. 1, an optical branching unit 1 has an optical gain equalizer 2 on each of the branch lines. The wavelength multiplexed optical signal lights sent from station A have approximately the same level before entering an optical fiber amplifier 3. The signal lights propagate through the optical transmission line and pass through one or more optical fiber amplifiers 3. Because the amplification factor of the optical fiber amplifier 3 has a wavelength dependency, the level difference rises and grows each time the signal lights pass through the optical fiber amplifiers 3. For a signal light with a wavelength whose amplification factor is low, the level ratio between the spontaneous emission light generated from the optical fiber amplifier and the signal light is small, meaning that reception errors will likely occur. The signal lights are branched into two at the optical branching unit 1. The branched lights pass through the optical gain equalizers 2 and the optical fiber amplifiers 3. One of them is sent to station B, while the other is sent to station C. At this time, the optical gain equalizers 2 installed in the optical branching unit equalize the gains of the signal lights to make the signal light levels equal at the start of the optical branch lines. Therefore, even if the requirements of the optical branching lines differ, an optical transmission system may be designed more easily. Each of the two optical gain equalizers 2 may have its own gain equalization characteristics according to the requirements of the branch line. In addition, the optical gain equalizer 2 may be installed in one of the branch lines only.

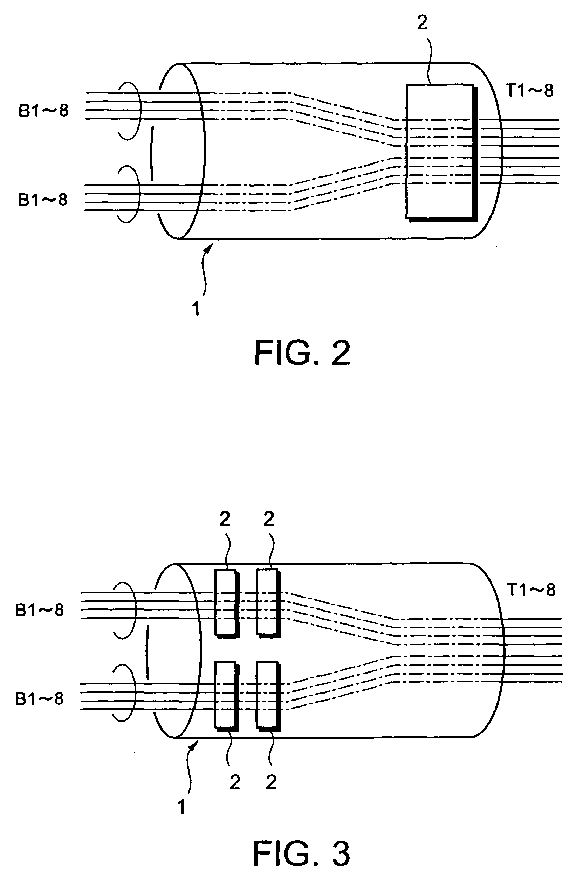

Referring to FIG. 2, one optical gain equalizer 2 is installed before the branch point of the optical branching unit 1. This optical branching unit 1, with only one optical gain equalizer 2, is less costly but lacks design flexibility when designing an optical transmission system.

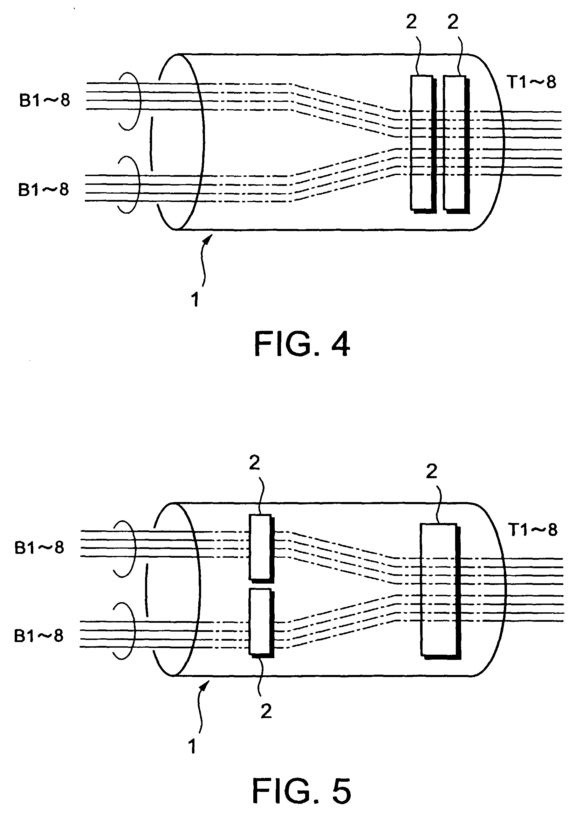

Referring to FIGS. 3 and 4, the optical branching unit 1 has a plurality of optical gain equalizers 2. When more signal lights are wavelength-multiplexed and the signal light wavelength band becomes wide, all signal lights cannot be processed by one optical gain equalizer. In such a case, half of the signal lights are processed, for example, by one optical gain equalizer 2 with the rest processed by the other optical gain equalizer 2. Some wavelength bands processed by these optical gain equalizers do not overlap, while other wavelength bands partially overlap. Or, though the wavelength areas processed by both optical gain equalizers are the same, each may have its own loss characteristics (gain equalization characteristics). In this case, the characteristics composed by those characteristics compensate for the gain difference of the signal lights.

Referring to FIG. 5, two optical gain equalizers 2 are provided after, and one optical gain equalizer 2 is provided before, the branch point of the optical branching unit 1.

When an optical transmission line has a plurality of optical branching units, all optical branching units, or only some of them, may have optical gain equalizers.

The optical gain equalizer 2 installed in the optical branching unit 1 equalizes the signal light levels completely or makes a signal level difference among the signal lights according to the status of the optical branch lines. In some cases, optical gain equalizers are installed in one optical branch line only. The wavelength-multiplexed signal lights may be, for example, in the 1.55-micron wavelength band with the signal light wavelength interval of 0.8 nm to 1.0 nm. The optical branching unit may be a known device such as a normal optical fiber coupler. The optical gain equalizer is known. For this device, a fiber grating, composed of an optical fiber with a periodically-changing refractive index, is used. Adjusting the grating interval, grating length, and soon allows attenuation characteristics to be composed that compensate for the wavelength dependency of an optical amplifier. In the above figures, the signal lights (T1∼8) entering the optical branching unit are represented by eight lines, and the branched signal lights (B1∼8) by four lines. In practice, eight signal lights (T1∼8) enter the optical branching unit and each branched light (B1∼8) is composed of eight signal lights. As described above, the optical branching unit according to the present invention comprises one or more optical gain equalizers, thus facilitating the gain equalization of the whole optical transmission line system having optical branch lines. Figs. 1 to 5 are very simplified figures. Transmission lines including branch lines have their own repeaters and equalizers in order to relay and equalize signal lights.

While the present invention has been described in connection with certain preferred embodiments, it is to be understood that the subject-matter encompassed by the present invention is not limited to those specific embodiments. On the contrary, it is intended to include all alternatives, modifications, and equivalents as can be included within the scope of the following claims.

Each feature disclosed in this specification (which term includes the claims) and/or shown in the drawings may be incorporated in the invention independently of other disclosed and/or illustrated features.

The text of the abstract filed herewith is repeated here as part of the specification.

An optical branching unit for installation on an optical transmission line comprises an optical gain equalizer. The optical gain equalizer equalizes the levels of wavelength-multiplexed signal lights amplified by an optical amplifier. Because the levels of the signal lights propagated through optical branch lines become equalized at a branching point, the design of the optical transmission system with the optical branch lines is simplified. The optical branching unit may comprise a plurality of optical gain equalizers.

## Claims

1. An optical branching unit for installation on an optical transmission line, said optical branching unit comprising a gain equalizer adjusting levels of a plurality of signal lights.

2. The optical branching unit according to claim 1, wherein said gain equalizer equalizes levels of the plurality of signal lights.

3. The optical branching unit according to claim 1, wherein said gain equalizer compensates for a wavelength dependency of a gain of at least one optical fiber amplifier installed on the optical transmission line.

4. The optical branching unit according to claim 1, wherein at least one gain equalizer is installed before or after or both before and after a branch point of said optical branching unit.

5. The optical branching unit according to claim 1, wherein said gain equalizer is installed only on one of optical branch lines after a branch point of said optical branching unit.

6. The optical branching unit according to claim 1, wherein a plurality of gain equalizers are installed, said plurality of gain equalizers adjusting the levels of the signal lights in different wavelength bands or in partially- or completely-overlapped wavelength bands.

7. The optical branching unit according to any one of the preceding claims, in combination with the optical transmission line.
